(19) Europäisches Patentamt / European Patent Office / Office européen des brevets

(11) **EP 2 767 881 A1**

(12) **EUROPEAN PATENT APPLICATION**

(43) Date of publication:
**20.08.2014 Bulletin 2014/34**

(51) Int Cl.:
*G06F 1/03* (2006.01)          *G06F 1/035* (2006.01)

(21) Application number: **14155665.4**

(22) Date of filing: **18.02.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **18.02.2013  IT BO20130068**

(71) Applicant: **Active Technologies S.r.l.**
**44124 Ferrara (IT)**

(72) Inventor: **Pellati, Paolo**
**44100 FERRARA (IT)**

(74) Representative: **Bergadano, Mirko et al**
**Studio Torta S.p.A.**
**Via Viotti, 9**
**10121 Torino (IT)**

(54) **Method and system for digital synthesis of a waveform**

(57)     A method for digital synthesis of a waveform, wherein: samples of a reference waveform that is divided into a plurality of contiguous time segments are stored in a digital memory (2); the duration of each time segment is set at a respective desired value (Tsd); the time segments are scanned in an orderly manner as a function of a clock signal (CK) so as to select one time segment at a time; for the time segment selected, a relative time that has elapsed from the start of the time segment is calculated as a function of the clock signal (CK); the memory (2) is addressed as a function of said relative time and of a ratio between the number of the samples (N) and the desired duration (Tsd) of the time segment in order to read at least part of the samples (SD) of the time segment; and a digital-to-analog conversion of the samples (SD) read from the memory (2) is carried out.

FIG.1

**Description**

The present invention relates to a method for digital synthesis of a waveform and to a corresponding digital-synthesis system.

The present invention finds advantageous, though not exclusive, application in function generators, to which the ensuing description will make explicit reference, without this implying any loss of generality.

The technique traditionally used in function generators is the so-called "direct digital synthesis" (DDS) technique. A system for direct digital synthesis of signals comprises a digital memory for storing, in the form of a look-up table, a plurality of digitally encoded signal samples identified by respective memory addresses, a digital-to-analog (D/A) converter for converting the samples read from the memory into corresponding analog values constituted, for example, by voltage levels, and a phase accumulator for updating the memory address in such a way as to read a sequence of the samples from the memory. The phase accumulator and the D/A converter operate at the frequency of a clock signal generated by an oscillator internal or external to the digital-synthesis system itself.

The sequence of the analog values supplied by the D/A converter defines the waveform generated by the DDS system. The samples stored in the memory are consecutive samples of a reference waveform identified by respective mutually consecutive memory addresses. In other words, the samples stored in the memory represent that waveform (namely, the reference waveform) that is generated by the D/A converter by scanning in sequence all the memory addresses, at each "beat" of the clock signal.

The DDS system further comprises a control unit programmed for defining the frequency at which the phase accumulator updates the addresses of the memory. The frequency of updating of the addresses may be varied in a way proportional to the frequency of the clock signal in order to vary the frequency of the waveform generated. For instance, if the updating frequency is half the frequency of the clock signal, then each digital sample is read twice and hence the frequency of the waveform generated is halved with respect to that of the reference waveform. Instead, if the updating frequency is twice the frequency of the clock signal, then one digital sample out of two is not read and hence the frequency of the waveform generated doubles with respect to that of the reference waveform.

The variation of the frequency of updating of the addresses produces a dilation or compression of the waveform. This constraint may produce an undesirable effect on non-sinusoidal waveforms that consists in a significant alteration of the harmonic content of the waveform generated with respect to the reference waveform. This occurs, for example, if the reference waveform is a square wave. For the same reason, it is not possible to emulate a phase jitter on non-sinusoidal periodic signals, or else implement a pulse-width modulation (PWM).

Other undesirable effects of the direct-digital-synthesis technique are the loss of some details of the reference waveform, the generation of major quantization errors at fast variations of the reference waveform, and the violation of Shannon's theorem when the frequency of updating of the addresses is increased.

The object of the present invention is to provide a method for digital synthesis of an arbitrary waveform, said method being free from the drawbacks described above and, at the same time, being easy and inexpensive to implement.

According to the present invention, a method and a system for digital synthesis of a waveform are provided, according to what is defined in the annexed claims.

The present invention will now be described with reference to the annexed drawings, which illustrate a non-limiting example of embodiment thereof and in which:

- Figure 1 illustrates a general block diagram of the system of digital synthesis of waveforms according to the present invention;
- Figure 2 illustrates an example of reference waveform, the samples of which are stored in the memory of the system of Figure 1;
- Figure 3 illustrates a block diagram of the control unit of the system of Figure 1; and
- Figure 4 illustrates a flowchart of operation of a part of the control unit of Figure 3.

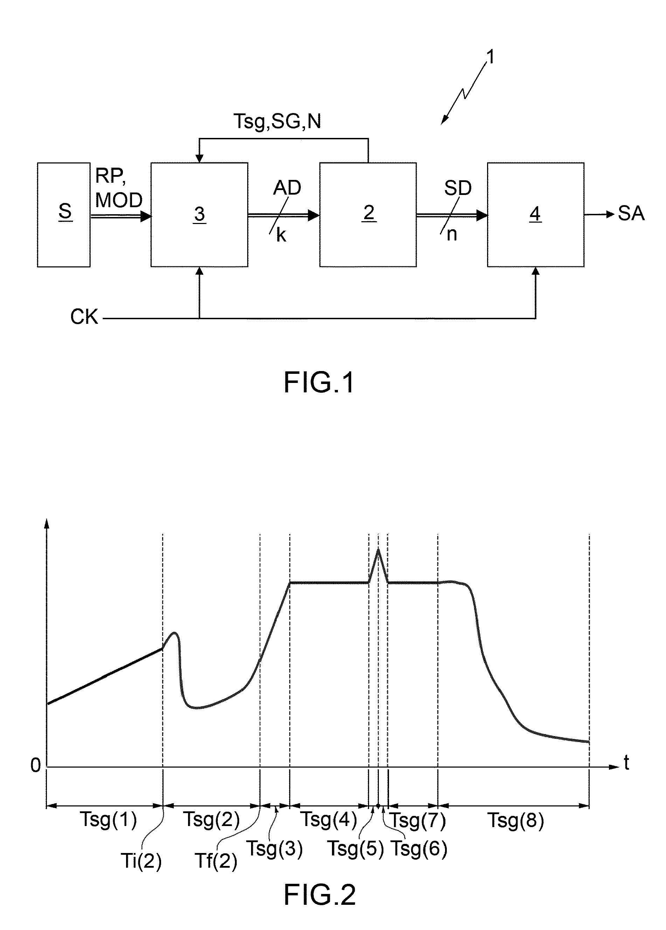

In Figure 1, designated as a whole by 1 is a system for digital synthesis of waveforms. The system 1 comprises a digital memory 2 for storing samples of a reference waveform, a control unit 3 for updating the addressing of the memory 2 at the frequency of a clock signal CK so as to read one sample at each cycle of the clock signal CK, and a D/A converter 4 for converting, in a way synchronous with the clock signal CK, the samples read from the memory 2 into corresponding analog values, constituted, for example, by voltage levels. The sequence of the analog values supplied by the D/A converter defines the waveform generated SA by the system 1. In the example of Figure 1, the clock signal CK is a signal with constant frequency Fc generated by a quartz oscillator that is external to the system 1 and for this reason is not illustrated. According to an alternative embodiment, the oscillator belongs to the system 1.

The samples are stored in the memory 2 in a consecutive way; i.e., they are consecutive samples of the reference waveform that are identified by respective mutually consecutive memory addresses. In other words, the samples are stored in the memory 2 in the form of a look-up table, where associated to each sample stored SD is a respective address AD of the memory 2. In general, the memory addresses are encoded with a number $k$ of bits, and the corresponding digital samples are encoded with a number $n$ of bits generally different from $k$.

The system 1 is configured for implementing the method for digital synthesis of a waveform according to the present invention, as described in what follows.

Unlike the DDS technique, which envisages a constant sampling period, i.e., one that is the same for the entire waveform, the reference waveform is divided into a plurality of mutually contiguous time segments, associated to each of which is a respective plurality of consecutive samples acquired according to a respective sampling period. The division into contiguous segments enables description of the reference waveform with a sampling period that depends upon the temporal variability of the reference waveform in the various segments. In other words, associated to each time segment is a number of samples and a sampling period that depends upon the degree of temporal variability of the segment itself. The temporal variability of a segment is measurable, for example, with the mean first derivative of the waveform in said segment. In particular, the sampling period of a segment is proportional to the degree of the temporal variability of the reference waveform of the segment. Hence, a segment that is characterized by a high temporal variability is conveniently represented by a high density of samples, i.e., samples that are very close to one another in time, and vice versa. In the limit it is possible to describe a segment characterized by a zero derivative with just one sample. Within each segment the sampling period is constant.

In the ensuing text and in the figures, designated by SG is the number of time segments of the reference waveform stored in the memory 2 in such a way that the generic segment is identified by an index s having an integer value ranging from 1 to SG, where N(s) is the number of samples of the s-th segment and Tsg(s) is the original duration of the s-th segment. The samples of the s-th segment are identified by an index c having a value ranging from 0 to N(s) minus 1. The number of segments SG and the number of samples N(s) of each segment are constant and stored in the memory 2 together with the samples of the reference waveform. The durations Tsg are also stored in the memory 2.

Alternatively, the sampling period Tsmp of each time segment, i.e., the s-th segment, is stored in the memory 2, and the respective duration Tsg(s) is calculated as a function of the respective sampling period Tsmp(s) and of the respective number of samples N(s).

The numbers of samples N, the original durations Tsg, and the sampling steps Tsmp are stored in the memory 2 as vectors, which each have a number of elements equal to the number of segments SG.

Figure 2 illustrates an example of reference waveform divided into eight contiguous segments, i.e., SG is equal to 8, with the corresponding durations Tsg(1) to Tsg(8). Also indicated in Figure 2 are the initial and final instants of the second segment (s=2), which are designated by Ti(2) and Tf(2), respectively. The segments with index s equal to 1, 4 and 7 have a lower temporal than the segments with index s equal to 2, 3, 5, 6 and 8.

The system 1 comprises a human-machine interface 5 for acquiring in real time the parameters, designated as a whole by MOD, which enable setting or modulation of the durations of the time segments, in a way independent of one another, with respective desired values. In other words, associated to each time segment is a respective desired duration, i.e., the duration that it is desired that the time segment should have when it is reproduced, which may be equal to or different from the original duration of the time segment of the reference waveform. In this way, the system 1 is able to generate different waveforms SA that are based upon the reference waveform and that differ from the latter for at least one of the durations of the time segments. For instance, the parameters MOD comprise multiplicative coefficients to be multiplied by the original durations to obtain the desired durations. Alternatively, the parameters MOD are themselves the desired values for the durations.

Furthermore, the human-machine interface 5 enables setting of a logic variable RP that enables/disables automatic repetition of the generation of the waveform SA. The human-machine interface 5 comprises, for example, a control panel provided with knobs and/or pushbuttons for acquiring the parameters MOD and setting the variable RP.

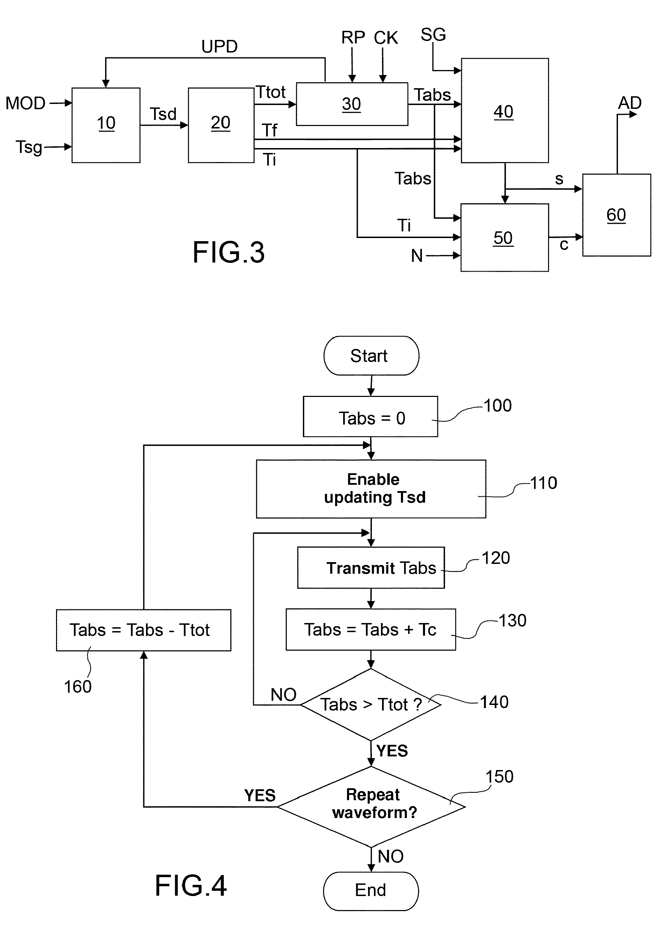

With particular reference to Figure 3, the control unit 3 comprises four open-chain functional blocks, designated, respectively, by 10, 20, 40, 50 and 60, and a feedback functional block, designated by 30.

The block 10 is a block for modulating the temporal durations of the segments, configured for reading the original durations Tsg from the memory 2 and for supplying desired durations Tsd obtained by modulating the original durations Tsg as a function of the modulation parameters MOD. In the case where these modulation parameters MOD define the absence of modulation of the durations, then the desired durations Tsd will be equal to the original durations Tsg. The modulation block 10 comprises, for example, a series of output registers that fix the values of the desired durations Tsd and that are read directly by the block 20 downstream.

The block 20 is configured for calculating the total duration Ttot of the temporal modulated segments, i.e., for calculating the sum of the desired durations Tsd and for determining the initial instant Ti(s) and the final instant Tf(s) of each segment as a function of the desired durations Tsd(s) of the previous segments. The desired durations Tsd, the initial instants Ti, and the final instants Tf are preferably managed as three respective vectors, each of which has a number of elements equal to the number of segments SG.

The block 30 is configured for processing elapsing of an absolute time Tabs, i.e., the time that has elapsed from the initial instant of the first time segment, as a function of the clock signal CK, of the logic variable RP, and of the total duration Ttot.

With particular reference to Figure 4, where the flowchart of operation of the processing block 30 is illustrated, when the control unit 3 is activated for generating a particular waveform, the absolute time Tabs is set to zero (step 100) and then updating of the desired durations Tsd (step 110) is enabled. Updating of the desired durations Tsd is enabled by controlling an updating signal UPD (Figure 3) that drives the modulation block 10 for updating the durations Tsd.

The signal UPD is constituted, for example, by a normally low signal that has a high pulse of short duration generated at the instant in which it is desired to enable updating. The pulse of the signal UPD updates the output registers of the modulation block 10 with the new values of the desired durations Tsd calculated as a function of the current values of the modulation parameters MOD. The latter may in general be varied in real time by the user.

At each cycle of the clock signal CK, the processing block 30 increments the absolute time Tabs by an amount equal to the period Tc of the clock signal CK (step 130). Immediately before the absolute time Tabs is incremented, the latter is transmitted to the computing blocks 40 and 50 (step 120). For this purpose, the processing block 30 comprises, for example, an output register of its own that fixes the value of the absolute time Tabs that is read directly by the computing blocks 40 and 50. The action of transmitting the absolute time Tabs to the computing blocks 40 and 50 thus consists in updating the value of the output register with the last value of absolute time Tabs calculated.

If the absolute time Tabs is less than the total duration Ttot (output NO from step 140), then the sequence of steps of transmitting and incrementing the absolute time Tabs (steps 120 and 130) is repeated; otherwise (output YES from step 140), a check is made to verify whether it is necessary to repeat the waveform SA (step 150). This check basically consists in verifying the state, whether true or false, of the logic variable RP. If the waveform SA has to be repeated (output YES from step 150), i.e., if the value of the variable RP is "true", then the total duration Ttot is subtracted from the absolute time Tabs (step 160) and then updating of the desired durations Tsd (step 110) is enabled and the cycle of increment of the absolute time Tabs is repeated (steps 120-140).

With reference once again to Figure 3, block 40 identifies, as a function of a comparison between the absolute time Tabs and the values of the vectors of initial instants Ti and final instants Tf, the segment in which the samples are to be read. In greater detail, the computing block 40 identifies the segment the time interval of which, defined by the respective initial instant and final instant, comprises the current value of the absolute time Tabs; i.e., it identifies the index s that satisfies the following relation: $Ti(s) \leq Tabs < Tf(s)$.

The index s identified is transmitted to the next block 50. Hence, the computing block 40 in effect makes an orderly scan of the time segments.

According to a particular embodiment, the computing block 40 verifies, segment by segment starting from the first (s = 1), whether the aforesaid relation is verified and stops when it identifies the index s that satisfies it. For this reason, the computing block 40 must know the number of segments SG.

Block 50 computes the sequence of the indices c that identify, in the segment identified by the computing block 40, those samples associated to the segment that are to be read in sequence from the memory 2. In particular, the computing block 50 is configured for calculating the index c as the largest previous integer of the product of a relative time that has elapsed from the start of the segment identified by the index s, the relative time being equal to the difference between the absolute time Tabs and the initial time Ti(s) of the segment, and the ratio between the number of samples N(s) and the desired duration Tsd(s) of the segment identified by the index s. The index c sought is thus calculated by applying the following formula

$$c = \left\lfloor \left( Tabs - Ti(s) \right) \cdot \frac{N(s)}{Tsd(s)} \right\rfloor$$

The block 60 is a translation block that determines the memory address AD to be supplied to the memory 2 so as to read the corresponding sample SD as a function of a combination of the current values of the two indices s and c.

It should be noted that the index c supplied by the computing block 50 not necessarily changes value at each beat of the clock signal CK within a segment, in so far as the value of the index depends precisely upon the number of samples N(s) of the segment divided by the duration Tsd(s) of the segment itself. For instance, if a certain segment regards a constant stretch of waveform of relatively long duration (as compared to the period Tc of the clock signal CK), then that segment may comprise just one sample that is read a number of times over until the next segment is considered.

Hence, if the value of the variable RP is "true", the scan of the time segments, and hence the consequent generation of the waveform SA, is repeated whenever the absolute time Tabs exceeds the current total duration Ttot.

The user may vary the parameters MOD in real time to modulate one or more of the desired durations Tsd(s) independently of one another to provide various types of modulation of the reference waveform. However, since the updating of the desired durations Tsd is enabled only at the end of the scan of all the segments (Figure 4), none of the desired durations Tsd is modified during reading of the corresponding segment. If this control on the updating of the durations Tsd were not present, the variation of the parameters MOD would have an immediate effect on the degree of the desired durations Tsd read and used by the computing blocks 20-50, with the result that the waveform generated SA would undergo an undesirable variation of its own spectral content.

By way of example, assume that the period Tc is 2.3 ns and that the reference waveform is divided into two time segments (SG = 2), having the following numbers of samples:

N(1) = 5;
N(2) = 7.

Assume, moreover, setting the modulation parameters MOD in such a way that the desired durations of the two segments are set at the following values:

Tsd(1) - 10 ns;
Tsd(2) = 8 ns.

The computing block 20 will produce the following values:

Ttot = 18 ns;
Ti(1) = 0 ns; Ti(2) = 10 ns;
Tf(1) = 10 ns; Tf(2) = 18 ns;

Starting from the aforesaid values of Ttot, Ti and Tf, the processing block 30 and the computing blocks 40 and 50 will supply the following sequences of indices c:

s = 1; c = {0, 1, 2, 3, 4};
s = 2; c = {1, 3, 5}.

If a repetition of the waveform is required (RP = "true"), then the new sequence of indices s, c is generated starting from an absolute time Tabs equal to 0.4 ns, irrespective of the new values of the desired durations Tsd imposed with the repetition.

Now assume, instead, leaving the durations Tsd(1) unvaried and increasing Tsd(2) up to 15 ns. The computing block 20 supplies:

Ttot = 25 ns;
Ti(1) = 0 ns; Ti(2) = 10 ns;
Tf(1) = 10 ns; Tf(2) = 25 ns;

and the sequences of indices c become:

s = 1; c = {0, 1, 2, 3, 4};
s = 2; c = {0, 1, 2, 3, 4, 5, 6}.

If a repetition of the waveform is required (RP = "true"), then the new sequence of indices s, c is generated starting from an absolute time Tabs equal to 0.3 ns, irrespective of the new values of the desired durations Tsd imposed with the repetition.

The blocks 10-60 are obtained entirely by means of a programmable logic network, for example one or more FPGA modules appropriately programmed. In other words, the method for digital synthesis of a waveform according to the present invention is preferably implemented in hardware form. Hardware implementation guarantees a higher processing rate and hence is more suited to a function generator, which has to generate functions even at extremely high frequencies. However, the method according to the present invention may be implemented also by software. In fact, the individual functions of the blocks 10-60 may be clearly implemented by means of respective software portions.

Hence, the new technique of digital synthesis of waveforms described above may be defined as a technique of actual-time digital synthesis (ATDS).

The main advantages of the method for digital synthesis of waveforms and of the corresponding system of digital synthesis described above are outlined in what follows.

In the first place, the method enables the quantization error between the various segments of the reference waveform to be kept substantially constant, irrespective of the temporal and spectral characteristics of the segments, thanks to the possibility of weighting each segment differently, i.e., of describing the segments that present a high temporal variability with a large number of samples and the segments that present a low temporal variability with a low number of samples.

Furthermore, the method enables control of the desired duration Tsd of each of the segments of the waveform SA in such a way that, during generation of the waveform SA, each segment taken individually respects Shannon's theorem. For instance, the method enables modulation of the frequency of a sawtooth wave or a square wave without varying the duration of the fast rising and falling edges.

The method also enables signal modulations to be carried out that were not possible with the direct-digital-synthesis technique, for example PWM modulation and emulation of phase jitter, thanks to the possibility of modulating the duration only of some segments at each repetition of the waveform generated SA. For instance, to emulate the phase jitter on a square wave, it is sufficient to reduce and increase by the same amount the durations of the segments corresponding to the high level and low level of the square wave without modifying the duration of the segments that represent the transients between the two levels.

Finally, the method makes it possible not to lose significant details of the reference waveform at fast variations thereof.

**Claims**

1. A method for digital synthesis of a waveform, the method comprising:

- storing, in a digital memory (2), samples of a reference waveform divided into a plurality of contiguous time segments, associated to each of which is a respective plurality of said samples that are consecutive to one another;

- setting the duration of each time segment at a respective desired value (Tsd);

- scanning said time segments in an orderly manner as a function of a clock signal (CK) so as to select one time segment at a time;

- for the time segment selected, calculating a relative time that has elapsed from the start of the time segment as a function of the clock signal (CK) and addressing the memory (2) as a function of said relative time and of a ratio between the number of the samples (N) and the desired duration (Tsd) of the time segment in order to read at least part of the samples (SD) of the time segment; and

- making a digital-to-analog conversion of the samples (SD) read from the memory (2).

2. A method according to claim 1, wherein the samples of each segment are previously acquired with a respective constant sampling period within the time segment.

3. A method according to claim 1 or claim 2, wherein each sample of each time segment is identified by a sample index (c) having a value ranging from 0 to the number of samples (N) of the time segment minus 1; addressing the memory (2) comprising:

- calculating the value of the sample index (c) as integer part of the product of said time that has elapsed and said ratio; and

- determining the address to be supplied to the memory (2) as a function of the value of the sample index (c).

4. A method according to any one of claims 1 to 3, wherein each time segment is identified by a segment index (s) having a value ranging from 0 to the number of segments (SG) of said reference waveform (SG); the method comprising:

- calculating the initial instant (Ti) and final instant (Tf) of each time segment as a function of the durations (Tsd) of the previous time segments;

the step of scanning said time segments in an orderly manner comprising:

- calculating, as a function of the clock signal (CK), an absolute time (Tabs) that has elapsed from the initial instant of the first of said time segments; and

- calculating the value of the segment index (s) with which to select the time segment as a function of a comparison between the value of the absolute time (Tabs) and the initial and final instants (Ti, Tf) of the time segments.

5. A method according to claim 4, wherein said relative time of each time segment is calculated as difference between said absolute time (Tabs) and the respective initial instant (Ti).

6. The method according to claims 3 and 4, wherein the address to be supplied to the memory (2) is determined as a function of a combination of the current values of said sample index (c) and said segment index (s).

7. A method according to any one of claims 4 to 6, and comprising:

- calculating a total duration (Ttot) as sum of the durations (Tsd) of all the time segments;

the step of scanning said time segments in an orderly manner comprising:

- when the absolute time (Tabs) becomes longer than the total duration (Ttot), subtracting the total duration (Ttot) from the absolute time (Tabs) to enable repetition of the scan of the time segments.

8. A method according to claim 7, wherein setting the duration of each time segment (s) to a respective desired value (Tsd) comprises;

- acquiring in real time a new desired value (Tsd) for the duration of at least one of said time segments by human-machine interface means (5); and

- updating the durations of the time segments with the desired values after the total duration (Ttot) has been subtracted from the absolute time (Tabs).

9. A system for digital synthesis of a waveform, the system (1) comprising: a digital memory (2) for storing samples of a reference waveform divided into a plurality of contiguous time segments, associated to each of which is a respective plurality of said samples that are consecutive to one another; control means (3) for updating addressing of the memory (2) so as to read one sample at each cycle of the clock signal (CK); digital-to-analog conversion means (4) for converting, in a way synchronous with said clock signal (CK), the samples read from the memory (2); and human-machine interface means (5) for setting the duration of each time segment at a respective desired value (Tsd); said control means (3) being configured for scanning the time segments in an orderly manner as a function of the clock signal (CK) so as to select one time segment at a time and, for the time segment selected, calculating a relative time that has elapsed from the start of the time segment as a function of the clock signal (CK) and addressing the memory (2) as a function of said relative time and of a ratio between the number of the samples (N) and the desired duration (Tsd) of the time segment.

FIG.1

FIG.2

UPD

MOD → | 10 | → Tsd → | 20 | Ttot → | 30 | Tabs → | 40 |

RP CK    SG

Tf

Ti

AD

Tabs

Ti

N →

| 50 |    c

s

| 60 |

## FIG.3

Start

Tabs = 0 ————100

Enable
updating Tsd ————110

Transmit Tabs ————120

Tabs = Tabs + Tc ————130

Tabs = Tabs - Ttot

160

NO    Tabs > Ttot ? ————140

YES

YES    Repeat
waveform? ————150

NO

## FIG.4

End

9

Europäisches
Patentamt
European
Patent Office
Office européen
des brevets

**EUROPEAN SEARCH REPORT**

Application Number

EP 14 15 5665

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 4 956 798 A (DINTEMAN BRYAN J [US]) 11 September 1990 (1990-09-11) * column 1, line 7 - column 2, line 12 * * column 2, line 27 - column 5, line 29; figures * ----- | 1,2,9 | INV. G06F1/03 ADD. G06F1/035 |
| A | US 2003/105609 A1 (CONWAY CRAIG M [US] ET AL) 5 June 2003 (2003-06-05) * paragraph [0011] - paragraph [0017] * * paragraph [0059] - paragraph [0071] * * paragraph [0089] - paragraph [0092] * * paragraph [0098] - paragraph [0108]; figures 4,8-9F,11,13A-14 * ----- | 1,2,9 | |
| A | US 2012/161996 A1 (MARSHALL JR JERRY A [US] ET AL) 28 June 2012 (2012-06-28) * paragraph [0005] - paragraph [0007] * * paragraph [0017] - paragraph [0061]; figures 1-7 * ----- | 1,9 | |

TECHNICAL FIELDS
SEARCHED      (IPC)

G06F

The present search report has been drawn up for all claims

| Place of search | Date of completion of the search | Examiner |
|---|---|---|
| Munich | 28 May 2014 | Semple, Mark |

EPO FORM 1503 03.82 (P04C01)

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...........................................................................................
& : member of the same patent family, corresponding
document

## ANNEX TO THE EUROPEAN SEARCH REPORT
## ON EUROPEAN PATENT APPLICATION NO.

EP 14 15 5665

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2014

| Patent document cited in search report | | Publication date | Patent family member(s) | | Publication date |
|---|---|---|---|---|---|
| US 4956798 | A | 11-09-1990 | EP | 0411764 A2 | 06-02-1991 |
| | | | JP | H0368204 A | 25-03-1991 |
| | | | US | 4956798 A | 11-09-1990 |
| US 2003105609 | A1 | 05-06-2003 | NONE | | |
| US 2012161996 | A1 | 28-06-2012 | CN | 103270468 A | 28-08-2013 |
| | | | US | 2012161996 A1 | 28-06-2012 |
| | | | US | 2014055461 A1 | 27-02-2014 |
| | | | WO | 2012088130 A2 | 28-06-2012 |

EPO FORM P0459

For more details about this annex : see Official Journal of the European Patent Office, No. 12/82